## Europäisches Patentamt
## European Patent Office
## Office européen des brevets

(19)

(11) Veröffentlichungsnummer: **0 170 161**
**B1**

(12) # EUROPÄISCHE PATENTSCHRIFT

(45) Veröffentlichungstag der Patentschrift:
**27.12.89**

(51) Int. Cl.⁴: **H 02 B 1/20**

(21) Anmeldenummer: **85108965.6**

(22) Anmeldetag: **18.07.85**

(54) Installationsgerät für Sammelschienensysteme.

(30) Priorität: **03.08.84  DE 3428738**

(43) Veröffentlichungstag der Anmeldung:
**05.02.86 Patentblatt 86/6**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**EP-A-0 053 252**
**DE-A-3 316 203**
**US-A-4 004 197**

(73) Patentinhaber: **Alfred Wöhner GmbH, 87,
Mönchrödener Strasse, D-8633 Rödental (DE)**

(72) Erfinder: **Büttner, Alex, 3, Wirthswiese, D-8633
Rödental (DE)**

(74) Vertreter: **Metzler, Jürgen, Dipl.- Ing.,
Ketschendorfer Strasse 76, D-8630 Coburg (DE)**

2

## Beschreibung

Die Erfindung bezieht sich auf ein insbesondere als Motorschutzschalter oder Sicherungsautomat ausgebildetes Installationsgerät zur Anbringung und Halterung an Sammelschienensystemen, das ein integriertes Basisteil mit innenliegenden Stromleitern und nach außen ragenden Aufsteckfüßen zur jeweiligen Verbindung der innenliegenden Stromleiter mit der dazugehörigen Sammelschiene und zum direkten Aufsetzen des Geräts auf die Sammelschienen aufweist.

Aus der DE-A-3 316 203 ist ein derartiges, als dreipolige Sockelplatte ausgebildetes Installationsgerät zur Befestigung an Sammelschienen bekanntgeworden. Die nach außen ragenden Aufsteckfüße hintergreifen im aufgesteckten Zustand die Sammelschienen und halten das Installationsgerät an den Sammelschienen. Zur formschlüssigen Arretierung des Installationsgerätes weist es ein Langloch auf, in dessen Bereich eine Verzahnung angeordnet ist, die mit der Verzahnung eines Klemmstücks korrespondiert. Das Klemmstück, das von einer das Langloch durchgreifenden Schraube durchsetzt ist, ist im gelösten Zustand verschiebbar und wird nach dem Aufsetzen des Geräts auf die Sammelschienen bis zur Anlage an eine dieser Sammelschienen verschoben und sodann nach dem Festschrauben durch die Verzahnungen in dieser Lage festgehalten, so daß das Gerät an den Sammelschienen festgelegt ist. Diese Art der Festlegung des Installationsgeräts an den Sammelschienen ist umständlich, zeitaufwendig und wird vom Monteur oft vergessen. Weiterhin ist aus der EP-A-53 252 ein Adapter für Installationsgeräte bekannt, der mit quer zu den Sammelschienen verlaufenden Strom- oder Kontaktschienen ausgestattet ist und auf dem die Installationsgeräte durch Verrastung und Verschraubung gehalten sind. Die Befestigung des Adapters an den Sammelschienen erfolgt bei gleichzeitiger elektrischer Verbindung der jeweiligen Kontaktschiene mit der zugehörigen Sammelschiene jeweils mittels einer winkelförmigen Pratze, die die Sammelschiene hintergreift, und einer die Kontaktschiene und die Pratze durchgreifenden Schraube, wobei ggf. zur Abstützung der Kontaktschienen an den nicht kontaktierten Sammelschienen besondere Isolier-Distanzstücke verwendet werden. Diese Art der Befestigung ist ebenfalls umständlich und montageaufwendig. Die Verwendung eines besonderen Adapters zur Halterung der Installationsgeräte hat den weiteren Nachteil, daß die Lagerhaltung vergrößert wird und Adapter und Installationsgerät im Verbindungsbereich exakt aufeinander abgestimmt sein müssen. Insbesondere bei Fertigung der Teile in verschiedenen Herstellerbetrieben ergeben sich immer wieder Schwierigkeiten beim Montieren von Installationsgeräten, was zu unliebsamen Verzögerungen und entsprechender Verteuerung führt.

Die Aufgabe der Erfindung besteht darin, das Installationsgerät der im Oberbegriff des Anspruches 1 angegebenen Art insoweit zu verbessern, daß es nach dem direkten Aufsetzen auf die Sammelschienen selbsttätig mit diesen verrastet und somit formschlüssig gehalten ist, diese feste Verbindung aber jederzeit wieder lösbar ist. Dabei soll das ohne Zwischenschaltung eines besonderen Adapters auf die Sammelschienen aufsetzbare Gerät kompakt ausgebildet sein und auch Schutz vor Berührung stromführender Teile bieten und damit zur Erhöhung der Sicherheit beitragen.

Zur Lösung dieser Aufgabe sind bei der Erfindung die im kennzeichnenden Teil des Anspruches 1 angegebenen Merkmale vorgesehen, wobei noch in den weiteren Ansprüchen für die Aufgabenlösung vorteilhafte und förderliche Weiterbildungen beansprucht sind.

Das erfindungsgemäße Installationsgerät, vorzugsweise ein Motorschutzschalter oder ein Sicherungsautomat, das ein integriertes Basisteil mit innenliegenden Stromleitern und nach außen ragenden Aufsteckfüßen aufweist, ist mit einer Verriegelungsvorrichtung ausgestattet, die das Gerät beim direkten Aufsetzen auf die Sammelschienen mit diesen verriegelt. Diese Verriegelungsvorrichtung besteht im wesentlichen aus einer an der Unterseite des Geräts vorragenden Verriegelungsnase, die beim Aufsetzen auf das Sammelschienensystem zurückgedrückt wird und nach dem richtigen Aufsetzen unter der Wirkung einer Druckfeder hinter die Sammelschiene rastet und somit eine formschlüssige Verbindung zwischen Gerät und Sammelschienensystem herstellt. Diese Rastverbindung ist jederzeit wieder lösbar, so daß das Gerät abgenommen und gegen ein anderes ausgetauscht werden kann. Die federnd an die Sammelschienen mittels einer Druckfeder angedrückten Kontaktstücke sorgen für einen guten elektrischen Kontakt zwischen der jeweiligen Sammelschiene und den innenliegenden Stromleitern, die als Strom- oder Verbindungsschienen gestaltet sind. Durch aufsteckbare Abdeckungen werden stromführende Teile des Geräts vor Berührung, aber auch vor Verschmutzung geschützt. An den Seitenflächen sind über die gesamte Länge des Geräts verlaufende Vertiefungen vorgesehen, wodurch sich jeweils zwischen zwei benachbarten Geräten Kabelkanäle ergeben, durch die die Verbindungskabel geführt werden können, so daß der vorhandene Platz optimal genutzt werden kann. Das Gerät kann in schmälerer Ausbildung mit hintereinanderliegenden Drucktasten oder Kipphebeln oder aber in breiterer Ausbildung mit zwei hintereinanderliegenden Schaltern ausgeführt sein, so daß ein dem jeweiligen Zweck optimal angepaßtes Gerät zur Verfügung steht.

Die Erfindung wird nun anhand von Ausführungsbeispielen im Zusammenhang mit der Zeichnung näher erläutert. Es zeigen:

Fig. 1 eine Draufsicht auf einen Motorschutzschalter mit zwei in Reihe hintereinanderliegenden Schaltern,

Fig. 2 eine seitliche Ansicht des Motorschutzschalters, z.T. aufgebrochen,

Fig. 3 eine Stirnansicht des Motorschutzschalters gemäß Pfeil III in Fig. 1,

Fig. 4 eine Draufsicht auf den Motorschutzschalter mit Abdeckung, abgebrochen dargestellt,

Fig. 5 eine seitliche Ansicht des Schutzschalters mit Abdeckungen,

Fig. 6 einen Schnitt durch eine Abdeckung gemäß Schnittlinie VI - VI in Fig. 5,

Fig. 7 eine Draufsicht auf eine andere Ausführungsform des Schutzschalters mit zwei hintereinanderliegenden Drucktasten in verschmälerter Bauart und

Fig. 8 eine Stirnansicht des Schutzschalters nach Fig. 7.

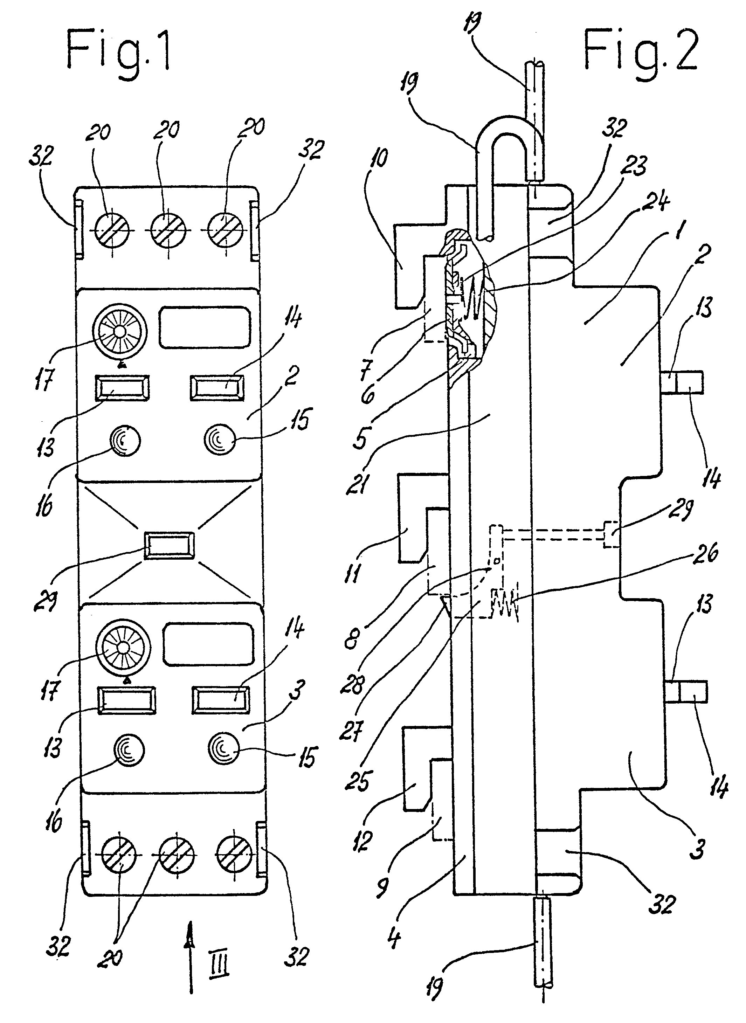

Das in den Fig. 1 bis 3 gezeigte, als Motorschutzschalter ausgebildete Installationsgerät besteht im wesentlichen aus dem Oberteil 1, das die beiden hintereinanderliegenden Schalter 2 und 3 aufnimmt, und dem Unter- oder Basisteil 4, in dem die Strom- oder Verbindungsschienen bzw. -leiter 5 angeordnet sind, die über Kontaktstücke 6 nach dem Aufsetzen des Installationsgeräts auf das Sammelschienensystem jeweils mit den Sammelschienen 7, 8 und 9 mit diesen elektrisch verbunden sind. Bei dem vorliegenden dreiphasigen Sammelschienensystem mit drei Sammelschienen 7, 8 und 9 sind somit auch für jedes Installationsgerät drei innenliegende Stromschienen 5 vorgesehen. Zur sicheren Halterung des Installationsgeräts am Sammelschienensystem sind drei Halte- bzw. Aufsteckfüße 10, 11 und 12 am Basisteil 4 angeordnet, die die jeweilige Sammelschiene nach dem Aufsetzen umfassen.

Oberteil 1 und Basisteil 4 bilden eine Einheit, d.h. das Basisteil 4 mit seinen Aufsteckfüßen 10, 11 und 12 ist in den Motorschutzschalter integriert. Dabei kann das Basisteil 4 mit dem Oberteil 1 einstückig ausgebildet sein; das Basisteil 4 kann aber auch beispielsweise durch Schrauben oder Nieten mit dem Oberteil 1 verbunden sein. Wesentlich ist, daß kein besonderer Adapter od. dgl. nötig ist, sondern der Motorschutzschalter direkt auf die Sammelschienen 7, 8, 9 aufsetzbar ist.

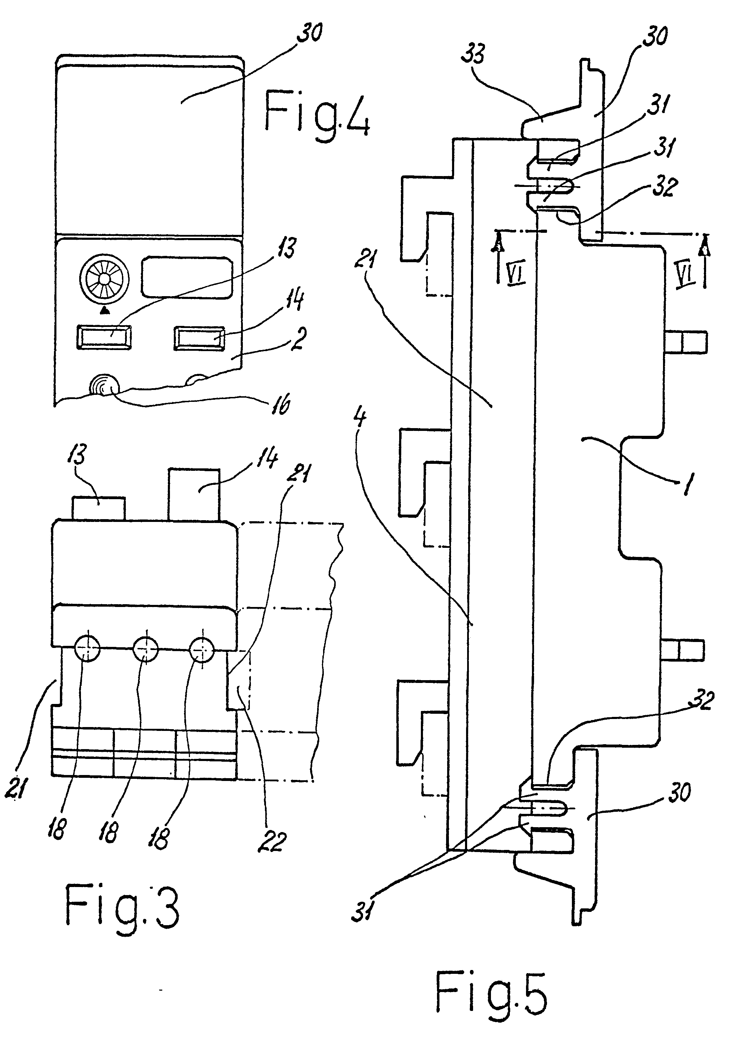

Wie bereits ausgeführt, enthält das Oberteil 1 zwei hintereinanderliegende Schalter 2 und 3, die jeweils zwei Tasten 13 und 14 aufweisen, mit denen die Sicherung ein- bzw. ausgeschaltet werden kann. Der jeweilige Schaltzustand wird durch die Signallampen 15 und 16 angezeigt. Der Auslösestrom der als Wärmeauslöser, ggf. gekoppelt mit magnetischen Kurzschluß-Schnellauslösern, ausgebildeten Schalter läßt sich mit Hilfe der Einstellscheibe 17 verändern. An den Stirnseiten sind die Schraubklemmen 18 für die Leitungen bzw. Kabel 19 angeordnet, die mit Hilfe der von oben zugänglichen Schrauben 20 festgeklemmt oder aber gelöst werden können. Zur Durchführung der Kabel 19 sind zu beiden Seiten des Basisteils 4 über dessen gesamte Länge verlaufende nutartige Vertiefungen 21 vorgesehen, so daß sich zwischen zwei benachbarten und dicht nebeneinanderliegenden Schutzschaltern (in Fig. 3 ist ein zweiter Schutzschalter strichpunktiert dargestellt) ein Durchgangskanal 22 bildet, in die die von oben nach unten verlaufenden Kabel eingelegt sind.

Die bereits erwähnten Kontaktstücke 6 weisen einen Fortsatz 23 auf, der in eine Durchgangsbohrung der Stromschiene 5 eingreift und diese geringfügig überragt, so daß er zur Halterung und Zentrierung einer Druckfeder 24 herangezogen werden kann, die bestrebt ist, das Kontaktstück 6 nach außen gegen die jeweilige Sammelschiene 7, 8 oder 9 zu pressen und so einen guten elektrischen Kontakt zwischen Sammelschiene und Kontaktstück einerseits und zwischen Kontaktstück und Stromschiene andererseits herzustellen. Zur Festlegung des Installationsgeräts an den Sammelschienen 7, 8, 9 ist noch eine Verriegelungseinrichtung 25 vorgesehen, die schematisch in Fig. 2 zu erkennen ist und im wesentlichen aus einer unter der Wirkung der Druckfeder 26 stehenden Verriegelungsnase 27 besteht, die beim Aufsetzen des Installationsgeräts auf das Sammelschienensystem zurückgedrückt wird und nach dem Aufsetzen die Sammelschiene 8 (oder aber eine der anderen Sammelschienen) formschlüssig hintergreift. Die Verriegelungsnase 27 ist Teil des Schwenkhebels 28, der über die Lösetaste 29, die von oben zugänglich ist, verschwenkt werden kann, wodurch die Verriegelung gelöst wird.

Aus den Fig. 4 bis 6 geht noch hervor, daß im Bereich der Enden bzw. Stirnseiten des Installationsgeräts Abdeckungen 30 als Schutz vor Berührung elektrisch leitender Teile wie auch als Staubschutz angeordnet sind. Diese Abdeckungen 30 weisen beiderseits Rastzungen 31 auf, deren freien Enden widerhakenartig gestaltet sind und die elastisch nachgiebig sind. An den Seitenflächen des Oberteils 1 sind Ausnehmungen 32 angebracht. Diese Ausnehmungen 32, die, wie in Fig. 2 und 5 deutlich zu erkennen ist, in die seitlichen Vertiefungen 21 auslaufen, verbreitern sich in ihrem oberen Bereich, so daß die Rastzungen 31 beim Aufsetzen der Abdeckungen 30 leicht in die Ausnehmungen eingeführt werden können, die sie im aufgesetzten Zustand der Abdeckungen 30 nach dem Einschnappen formschlüssig hintergreifen. Die Abdeckungen 30 weisen noch eine an den Stirnseiten des Motorschutzschalters anliegende Deckwand 33 mit Ausnehmungen für die Kabel 19 auf; die Deckwand 33 kann auch gerade durchgehend und zurückgesetzt gestaltet sein.

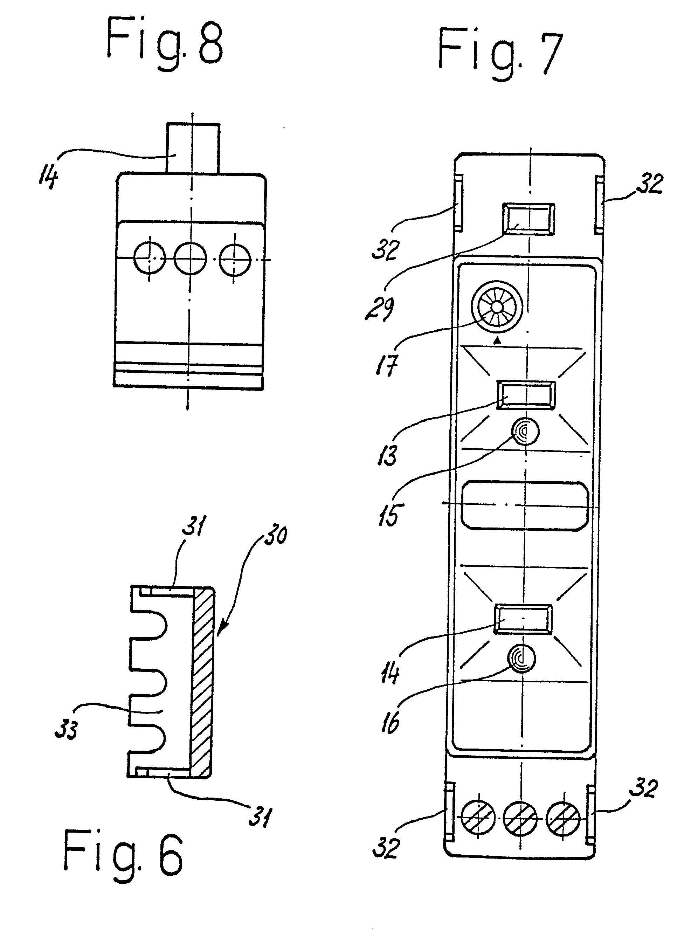

In den Fig. 7 und 8 ist noch eine verschmälerte Bauart des Motorschutzschalters gezeigt. Bei dieser Ausführungsform ist lediglich ein Sicherungsschalter vorgesehen, dessen beiden Drucktasten 13 und 14 mit den jeweils zugehörigen Signallampen 15 und 16 hintereinanderliegen. Statt der Drucktasten können auch Kipphebel od. dgl. vorgesehen sein. Auch bei dieser Ausführungsform können Ausnehmungen 32 für Abdeckungen angeordnet sein. Im übrigen entspricht der Aufbau dieser verschmälerten Schutzschalter dem bereits weiter oben beschriebenen Aufbau der Installationsgeräte gemäß Fig. 1 bis 6.

Das in der Ausbildung als Motorschutzschalter beschriebene Installationsgerät weist durch seine dreipolige, in Reihe übereinanderliegende Bauweise nur eine geringe Breite auf, ist also kompakt gestaltet, so daß eine größere Anzahl von nebeneinanderliegenden Geräten auf den Sammelschienen Platz findet.

## Patentansprüche:

1. Insbesondere als Motorschutzschalter oder Sicherungsautomat ausgebildetes Installationsgerät zur Anbringung und Halterung an Sammelschienensystemen (7, 8, 9), das ein integriertes Basisteil (4) mit innenliegenden Stromleiter (5) und nach außen ragenden Aufsteckfüßen (10, 11, 12) zur jeweiligen Verbindung der innenliegenden Stromleiter (5) mit der dazugehörigen Sammelschiene (7, 8, 9) und zum direkten Aufsetzen des Geräts auf die Sammelschienen aufweist, dadurch gekennzeichnet, daß eine Verriegelungsvorrichtung (25) vorgesehen ist, deren unter der Wirkung einer Feder (26) stehende Verriegelungsnase (27) nach dem Aufstecken des Geräts auf die Sammelschienen (7, 8, 9) eine dieser Sammelschienen lösbar hintergreift.

2. Installationsgerät nach Anspruch 1 dadurch gekennzeichnet, daß im Kontaktbereich der als Strom- oder Verbindungsschienen ausgebildeten Stromleiter (5) mit der jeweiligen Sammelschiene (7, 8, 9) Kontaktstücke (6) angeordnet sind, die einen den jeweiligen Stromleiter (5) durchdringenden Haltefortsatz (23) für eine Druckfeder (24) tragen.

3. Installationsgerät nach Anspruch 1 oder 2, dadurch gekennzeichnet, daß die Seitenflächen des Basisteils (4) über die gesamte Länge verlaufende nutartige Vertiefungen (21) zur Bildung von Kabeldurchgängen (22) zwischen zwei oder mehreren nebeneinander angeordneten Geräten aufweisen.

4. Installationsgerät nach einem der Ansprüche 1 bis 3 in der Ausbildung als Motorschutzschalter, dadurch gekennzeichnet, daß jeweils zwei Schalter hintereinander mit zwei nebeneinanderliegenden Drucktasten (13, 14) od. dgl. angeordnet sind.

5. Installationsgerät nach einem der Ansprüche 1 bis 3 in der Ausbildung als Motorschutzschalter, dadurch gekennzeichnet, daß bei verschmälerter Bauweise ein Schalter mit zwei hintereinanderliegenden Drucktasten (13, 14) od. dgl. angeordnet ist.

6. Installationsgerät nach einem der Ansprüche 1 bis 5, dadurch gekennzeichnet, daß im Bereich der beiden Enden des Geräts lösbare Abdeckungen (30) zum Abdecken der Klemmschrauben (20) od. dgl. angebracht sind, die elastisch nachgiebige Rastzungen (31) tragen, die in seitlich im Oberteil (1) des Gerätes angeordnete Ausnehmungen (32), diese formschlüssig hintergreifend, eingreifen.

7. Installationsgerät nach Anspruch 6, dadurch gekennzeichnet, daß die Ausnehmungen (32) für die Rastzungen (31) in die seitlichen Vertiefungen (21) des Basisteils (4) auslaufen.

8. Installationsgerät nach Anspruch 6 oder 7, dadurch gekennzeichnet, daß die freien Enden der Rastzungen (31) hakenartig ausgebildet sind.

9. Installationsgerät nach einem der Ansprüche 6 bis 8, dadurch gekennzeichnet, daß die Abdeckungen (30) eine beim Aufstecken an der Stirnseite des Geräts anliegende Deckwand (33) tragen.

10. Installationsgerät nach einem der Ansprüche 1 bis 9, gekennzeichnet durch eine dreipolige, in Reihe übereinanderliegende Bauweise.

## Claims:

1. An installation unit, in particular in the form of a motor protection switch or an automatic cut-out, to be fitted and mounted on a bus-bar system (7, 8, 9), which has an integrated base member (4) with internal current conductors (5) and outwardly projecting mounting feet (10, 11, 12) for respectively connecting the internal current conductors (5) to the associated bus-bar (7, 8, 9) and for the direct mounting of the unit on the bus-bars, characterised in that a locking device (25) is provided having a locking lug (27) which is acted upon by a spring (26) and which, after the unit has been fitted on to the bus-bars (7, 8, 9), engages releasably behind one of these bus-bars.

2. An installation unit according to Claim 1, characterised in that contact members (6), which have a retaining projection (23) for a compression spring (24) passing through the respective current conductor (5), are provided in the contact zone of the current conductors (5) with the respective bus-bar (7, 8, 9), said current conductors (5) being in the form of conductor rails or connector bars.

3. An installation unit according to Claim 1 or 2, characterised in that the lateral surfaces of the base member (4) have groove-like recesses (21) extending over their entire length serving to form cable passages (22) between two or more units disposed side by side.

4. An installation unit according to any one of Claims 1 to 3 in the form of a motor protection switch, characterised in that two switches are respectively arranged in series having two juxtaposed push-buttons (13, 14) or the like.

5. An installation unit according to any one of Claims 1 to 3 in the form of a motor protection switch, characterised in that in a narrower construction one switch is provided having two push-buttons (13, 14) or the like arranged one behind the other.

6. An installation unit according to any one of Claims 1 to 5, characterised in that covers (30) for covering terminal screws (20) or the like are provided in the vicinity of the two ends of the unit, which covers have resiliently flexible locating tongues (31) which engage in recesses (32) provided laterally in the top part (1) of the unit, so as to engage in form-locking manner behind these recesses.

7. An installation unit according to Claim 6, characterised in that the recesses (32) for the locating tongues (31) extend into the lateral recesses (21) of the base member (4).

8. An installation unit according to Claim 6 or 7, characterised in that the free ends of the locating tongues (31) are hook-shaped.

9. An installation unit according to any one of Claims 6 to 8, characterised in that the covers (30) have a top wall (33) which, when fitted, is applied against the end face of the unit.

10. An installation unit according to any one of Claims 1 to 9, characterised by a three-pole mode of construction, disposed one above the other in series.

**Revendications**

1. Appareil de branchement pour placement et fixation sur des systèmes de barres collectrices (7, 8, 9), conçu spécialement comme interrupteur de protection de moteur ou disjoncteur protecteur automatique, présentant une partie de base intégrée (4) avec des conducteurs de courant (5) en son intérieur et des pattes d'emboîtement (10, 11, 12), s'étendant vers l'extérieur, pour le raccordement des conducteurs de courant (5) se trouvant à l'intérieur à la barre collectrice correspondante (7, 8, 9) et pour le branchement direct de l'appareil sur les barres collectrices, caractérisé en ce qu'il est prévu un dispositif de verrouillage (25), dont le nez de verrouillage (27) se trouvant sous l'action d'un ressort (26) saisit, après l'emboîtement de l'appareil sur les barres collectrices (7, 8, 9), l'une de ces barres collectrices à l'arrière, de manière amovible.

2. Appareil de branchement suivant la revendication•1, caractérisé en ce que, à l'endroit du contact des conducteurs de courant (5), conçus comme barres de courant ou de connexion avec la barre collectrice (7, 8, 9) correspondante, il est disposé des pièces de contact (6) portant une extension de fixation (23) pour un ressort de compression (24) traversant le conducteur de courant (5) correspondant.

3. Appareil de branchement suivant la revendication 1 ou 2, caractérisé en ce que les faces latérales de la partie de base (4) présentent des évidements en forme de rainure (21) sur toute la longueur, pour la formation de passages de cables (22) entre deux ou plusieurs appareils disposés l'un à côté de l'autre.

4. Appareil de branchement suivant l'une ou l'autre des revendications 1 à 3, en exécution comme interrupteur de protection de moteur, caractérisé en ce qu'il est chaque fois disposé deux interrupteurs, l'un derrière l'autre, à deux boutons-poussoirs (13, 14) se trouvant l'un derrière l'autre, ou des dispositifs similaires.

5. Appareil de branchement suivant l'une ou l'autre des revendications 1 à 3, en exécution comme interrupteur de protection de moteur, caractérisé en ce que, dans une construction plus étroite, il est disposé un interrupteur à deux boutons-poussoirs (13, 14) se trouvant l'un derrière l'autre, ou des dispositifs similaires.

6. Appareil de branchement suivant l'une ou l'autre des revendications 1 à 5, caractérisé en ce que, à l'endroit des deux extrémités de l'appareil, sont disposés des couvercles amovibles (30) pour le recouvrement des vis de serrage (20) ou similaires, portant des languettes d'emboîtement (31) qui so donnent de manière élastique et s'emboîtent, de forme hermétique, dans des rainures (32) disposées latéralement dans la partie supérieure (1) de l'appareil.

7. Appareil de branchement suivant la revendication 6, caractérisé en ce que les évidements (32) pour les languettes d'emboîtement (31) aboutissent dans les rainures latérales (21) de la partie de base (4).

8. Appareil de branchement suivant la revendication 6 ou 7, caractérisé en ce que les extrémités libres des languettes d'emboîtement (31) sont conçues en forme de crochets.

9. Appareil de branchement suivant l'une ou l'autre des revendications 6 à 8, caractérisé en ce que les couvercles (30) portent une paroi de recouvrement (33) appuyant, lors de l'emboîtement, contre le côté avant de l'appareil.

10. Appareil de branchement suivant l'une ou l'autre des revendications 1 à 9, caractérisé par une construction tripolaire, superposée en série.

# Fig.1

# Fig.2

Fig.4

Fig.3

Fig.5

# Fig. 8

# Fig. 7

# Fig. 6